# EUROPEAN PATENT APPLICATION

(11) **EP 1 455 406 A2**
(43) Date of publication of application: **08.09.2004**
(21) Application number: 04004861.3
(22) Date of filing: 02.03.2004
(51) Int. Cl.: H01M 8/10, H01M 8/02, H01M 8/24

(54) **Fuel cell unit for electronic apparatus**

(30) Priority: 04.03.2003 JP 2003057468
(71) Applicant: Kabushiki Kaisha Toshiba, Tokyo (JP)
(72) Inventor: Ninomiya, Ryoji, Minato-ku Tokyo 105-8001 (JP); Miyamoto, Hirohisa, Minato-ku Tokyo 105-8001 (JP); Tomimatsu, Norihiro, Minato-ku Tokyo 105-8001 (JP); Sumino, Hiroyasu, Minato-ku Tokyo 105-8001 (JP); Akita, Masato, Minato-ku Tokyo 105-8001 (JP); Shibuya, Nobuo, Minato-ku Tokyo 105-8001 (JP)
(74) Representative: Henkel, Feiler & Hänzel

(57) **Abstract**

A fuel cell unit (40) includes a casing (42), an electromotive element which is located in the casing and generates electric power through a chemical reaction, and a fuel container which is removably connected to the casing and contains a fuel to be supplied to the electromotive element. The casing has a base and a wall surface (42d) in the form of an outwardly convex curved surface.

## Description

The present invention relates to a fuel cell unit usable as a power source for an electronic apparatus.

These days, a secondary battery, such as a lithium ion cell, is used mainly as a power source for an electronic apparatus, such as a portable, notebook-sized personal computer (hereinafter referred to as a notebook-sized PC), mobile apparatus, etc. To meet the requirements for increased power consumption and prolonged operation of these modern high-function electronic apparatuses, a small-sized fuel cell is expected to be used as a novel power source that ensures high output and dispenses with charging. There are various types of fuel cells. According to a direct-methanol fuel cell (hereinafter referred to as DMFC) that uses a methanol solution as a fuel, in particular, the fuel is easier to handle than hydrogen that is used in some other fuel cells, and its system is simpler. Thus, the fuel cell of this type is a noticeable power source for electronic apparatus.

Generally, a DMFC comprises a fuel tank, mixing tank, liquid conveying pump, air pump, etc. The fuel tank contains high-concentration methanol. The methanol in the fuel tank is diluted with water in the mixing tank. The liquid conveying pump feeds the methanol diluted in the mixing tank to an electromotive element under pressure. The air pump supplies air to the electromotive element.

The fuel cell constructed in this manner is inevitably larger in size than a secondary battery, such as a lithium ion cell. If the fuel cell is incorporated in the body of the notebook-sized PC, therefore, the overall size and weight of the PC increase, so that the proper advantage of the notebook-sized PC may possibly be spoiled. Owing to its principle of operation, the fuel cell is bound to produce water. If the fuel cell is incorporated in the computer body, therefore, electronic components in the computer body and the like may be adversely affected by water that is generated from the fuel cell, in some cases.

Described in Jpn. Pat. Appln. KOKAI Publication No. 2002-32154, therefore, discloses a computer system in which a fuel cell is located outside the body of a computer and can be connected to the computer body through a cable.

In this computer system, however, the fuel cell is situated at a distance from the computer body and connected to the computer body by the cable. If the computer system is worked on a desk or the like, therefore, it requires a wide installation area, and the cable is obstructive.

A fuel cell such as the DMFC uses liquid methanol as a fuel. Since methanol is a volatile poison, it must be securely prevented from leaking out. The fuel may possibly leak out when the fuel cell is removed from the computer body and carried about or if it is placed in a wrong position, for example. In some cases, the fuel tank may be damaged by shock, thereby allowing the fuel to leak out, as the fuel cell is transported or used. Thus, the fuel leakage must be prevented in consideration of various conditions.

On the other hand, the fuel cell generates electric power when a water solution of methanol and air are fed to the anode and cathode sides, respectively, of the electromotive element. As reaction products, carbon dioxide and water are formed on the anode and cathode sides, respectively, and the carbon dioxide and exhaust gas generated on the anode and cathode sides, respectively, contain some moisture as they are discharged into the atmosphere. Many fuel cells for electronic apparatuses are used in an office or the like, and are bound to be connected to the electronic apparatuses that are easily damaged by moisture. Thus, the moisture in the exhaust gas may possibly exert a bad influence upon the electronic apparatuses.

The fuel cell generates heat as it produces electric power. After its interior is cooled with the air that is introduced by means of a fan or the like, the heat is radiated from the cell. The exhaust gas that is produced accompanying the power generation or heat radiation is discharged to the outside through an aperture that is formed in the casing of the fuel cell. In the case of a fuel cell that is used in an unidentifiable place, however, the aperture for intake or exhaust may possibly be brought into intimate contact with a wall or object, depending on the way the cell is placed for operation. Otherwise, papers or some other objects may be put on the fuel cell and prevent satisfactory air intake or exhaust. In some cases, therefore, the output of the fuel cell may be lowered, or heat may be confined to the fuel cell and prevent appropriate power supply.

The present invention has been made to solve any of these problems, and an object of the invention is to provide a fuel cell unit for electronic apparatus, capable of supplying electric power to an electronic apparatus and ensuring reliable location or transfer.

Another object of the invention is to provide a fuel cell unit for an electronic apparatus, capable of being easily connected to an electronic apparatus and reducing the installation area, and an electronic apparatus system provided with the same.

Still another object of the invention is to provide a fuel cell unit for an electronic apparatus, capable of preventing a liquid fuel from leaking out as it is carried about or used.

A further object of the invention is to provide a fuel cell unit for an electronic apparatus, capable of preventing moisture in exhaust gas from causing a problem, or a fuel cell unit for electronic apparatus, capable of ensuring satisfactory exhaust and intake and stable operation regardless of its location.

In order to achieve the above objects, a fuel cell unit for an electronic apparatus according to an aspect of the invention comprises a casing, an electromotive element which is located in the casing and generates electric power through a chemical reaction, and a fuel container which is removably connected to the casing and contains a fuel to be supplied to the electromotive element, the casing having a base and a wall surface in the form of an outwardly convex curved surface.

A fuel cell unit according to another aspect of the invention comprises a casing, an electromotive element which is located in the casing and generates electric power through a chemical reaction, and a fuel storage section which is removably connected to the casing and contains a fuel to be supplied to the electromotive element, the casing having a base and a wall surface provided with a convex member.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing a fuel cell unit and a notebook-sized PC according to an embodiment of the invention;
FIG. 2 is a perspective view showing the backside of the fuel cell unit and the notebook-sized PC;
FIG. 3 is a side view of the fuel cell unit and the notebook-sized PC;
FIG. 4 is a perspective view showing the front side of the fuel cell unit and the notebook-sized PC;
FIG. 5 is a perspective view showing the backside of the notebook-sized PC;
FIG. 6 is a diagram schematically showing the internal construction of the notebook-sized PC;
FIG. 7 is a perspective view showing the fuel cell unit;
FIG. 8 is a side view of the fuel cell unit;
FIG. 9 is a diagram schematically showing the internal construction of the fuel cell unit;
FIG. 10 is a diagram schematically illustrating the principle of operation of an electromotive element of the fuel cell unit;
FIG. 11 is a side view schematically showing a fuel cell unit and a notebook-sized PC according to a second embodiment of the invention;
FIG. 12 is a perspective view showing a fuel cell unit according to a third embodiment of the invention;
FIG. 13 is a perspective view showing a fuel cell unit according to a fourth embodiment of the invention;
FIG. 14 is a perspective view showing a fuel cell unit according to a fifth embodiment of the invention;
FIG. 15 is a plan view showing a fuel cell unit and a notebook-sized PC according to a sixth embodiment of the invention;
FIG. 16 is a perspective view showing the fuel cell unit and a fuel container according to the sixth embodiment;
FIG. 17 is a side view showing the fuel cell unit and the notebook-sized PC according to the sixth embodiment;
FIG. 18 is a perspective view showing a fuel cell unit and a notebook-sized PC according to a seventh embodiment of the invention;
FIG. 19 is a side view showing the fuel cell unit and the notebook-sized PC according to the seventh embodiment;
FIG. 20 is an exploded perspective view showing a fuel cell unit and a notebook-sized PC according to an eighth embodiment of the invention;
FIG. 21 is a perspective view showing the fuel cell unit and the notebook-sized PC according to the eighth embodiment; and
FIG. 22 is a side view showing the fuel cell unit and the notebook-sized PC according to the eighth embodiment.

Electronic apparatus systems with fuel cell units according to several embodiments of the present invention will now be described in detail with reference to the accompanying drawings.

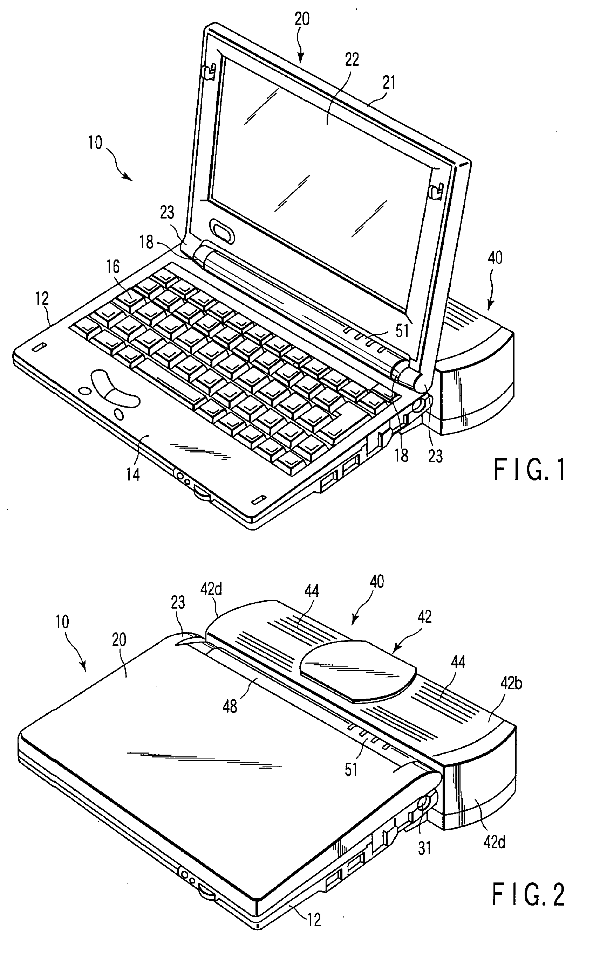

An electronic apparatus system comprises a notebook-sized PC 10 for use as an electronic apparatus and a fuel cell unit 40 that can be removably connected to the PC. As shown in FIGS. 1 to 5, the notebook-sized PC has a body 12 in the form of a flat rectangular box. A palm rest portion 14 is formed on the front part of the upper surface of the body 12. A keyboard 16 for use as input means is located behind the palm rest portion. A base 12a of the body 12 is a substantially flat rectangular structure.

A pair of hinge portions 18 are provided at the rear end portion of the upper surface of the body 12. A display unit 20 is rockably supported by the hinge portions 18. The display unit 20 has a casing 21 in the form of a flat rectangular box and a liquid crystal display panel 22 in the casing. The display unit 20 has a pair of leg portions 23, which extend from the lower end portion of the casing 21 and are supported by the hinge portions 18. The display unit 20 is rockable between an open position shown in FIG. 1 and a closed position shown in FIG. 2. In the open position, it is set upright at an optional angle to the body 12 behind the keyboard 16. In the closed position, the unit 20 is flattened to cover the keyboard from above.

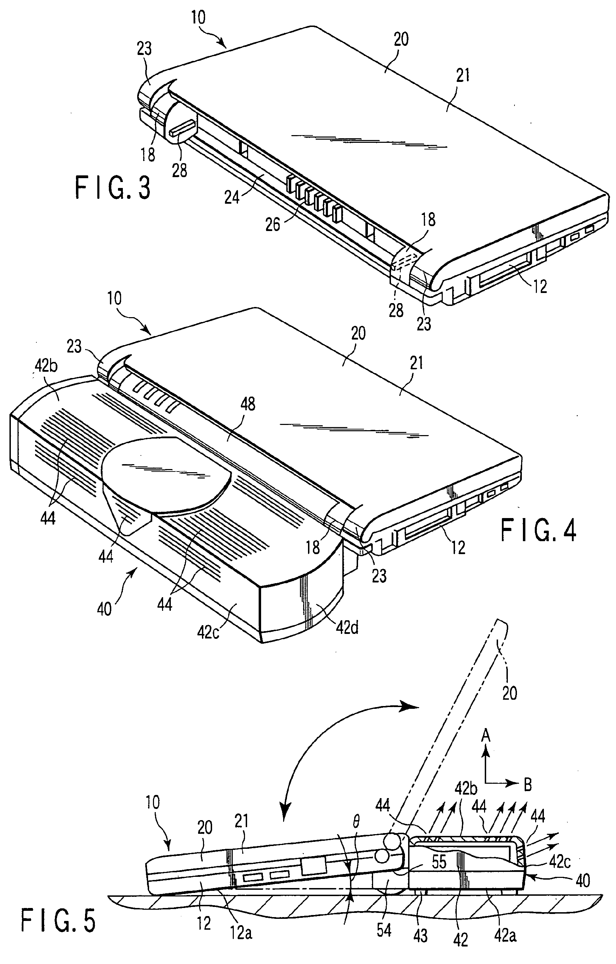

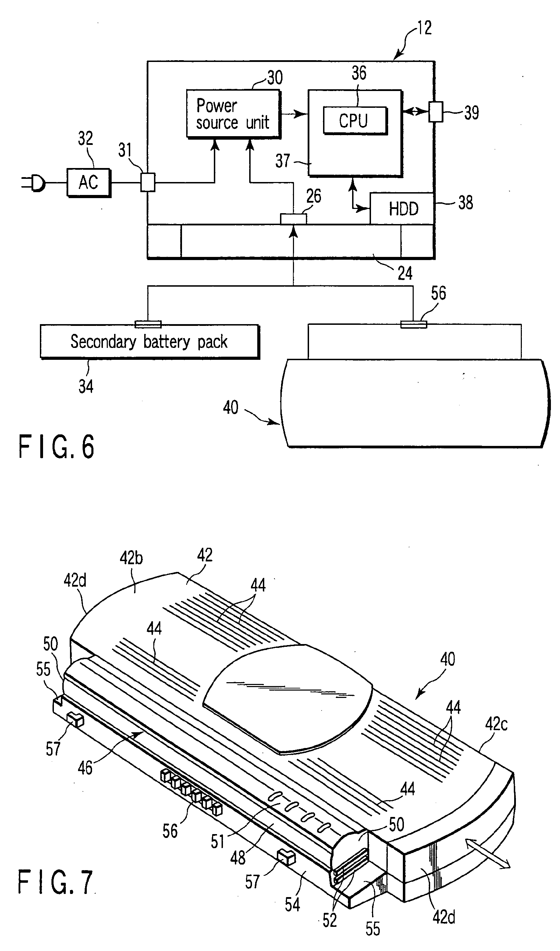

As shown in FIG. 3, a battery setting section 24 is formed as a recess in the back of the body 12, extending in the width direction of the body and opening on the backside. A connector 26 to be connected electrically to a battery is located substantially in the central part of the battery setting section 24. Terminals of the connector 26 extend substantially parallel to the base 12a of the body 12. Elongate guide ridges 28 are formed individually on the opposite end portions of the battery setting section 24. An elongate secondary battery pack 34 (see FIG. 6), such as a lithium ion cell, or the connecting section of the fuel cell unit 40 (mentioned later) is attached alternatively to the battery setting section 24.

As shown in FIG. 6, a power source unit 30 is arranged in the body 12. It can be fed with the commercial power through an AC adapter 32 that is connected to an AC connector 31 on a side face of the body 12. The power source unit 30 can be fed with power from the secondary battery pack 34 that is fitted to the battery setting section 24 or the fuel cell unit 40 that is connected to the battery setting section. The body 12 holds therein a main board 37 that is mounted with a CPU 36, a hard disc drive (HDD) 38 connected to the main board, a modem 39, etc. Power is supplied from the power source unit 30 to the main board 37.

The fuel cell unit 40 is constructed as a DMFC that uses methanol as a liquid fuel. As shown in FIGS. 4, 7 and 8, the unit 40 includes a casing 42 substantially in the form of a prism. The casing 42 has a flat bottom wall 42a, a top wall 42b, a rear wall 42c, and a pair of sidewalls 42d. The bottom wall 42a functions as a setting surface. The top wall 42b is opposed to the bottom wall substantially in parallel relation. The rear wall 42c is situated between the bottom and top walls. The sidewalls 42d are situated between the bottom and top walls on the longitudinally opposite end sides of the bottom wall.

A plurality of leg portions 43, e.g., four in number, which are formed of a protuberance each, protrude individually from the corner portions of the outer surface of the bottom wall 42a. The top wall 42b and the rear wall 42c have a number of slits 44 that serve as breathers, individually. Slits for ventilation may be also formed in the bottom wall 42a. Each of the sidewalls 42d is a curved plate that is outwardly convex.

A connecting section 46 that can be connected to the notebook-sized PC 10 is formed integrally with the front part of the casing 42 so as to protrude forward from it. The connecting section 46 is provided with a fitting portion 48 and a supporting portion 54. The fitting portion 48 can be removably attached to the battery setting section 24 of the body 12 of the PC 10. The supporting portion 54 supports the base 12a of the PC 10. The fitting portion 48 is in the form of an elongate rod that corresponds to the battery setting section 24 in shape, and extends in the longitudinal direction of the casing 42. The fitting portion 48 has a pair of end faces 50 that are situated at its longitudinally opposite ends, individually. These end faces extend substantially at right angles to the bottom wall 42a of the casing 42. Each end face 50 is formed having a pair of guide ribs 52 that can engage their corresponding guide ridge 28 of the PC 10. The ribs 52 extend substantially parallel to each other with a fixed gap between them and at an angle to the bottom wall 42a of the casing 42. In this example, the ribs 52 extend forward from the casing side and decline toward a plane that is parallel to the bottom wall 42a of the casing 42.

Thus, the fitting portion 48 that constitutes a part of the connecting section 46, including the guide ribs 52, and the bottom wall 42a of the casing 42 are spaced vertically. The supporting portion 54 of the connecting section 46 is situated below the fitting portion 48. The opposite end portions of the supporting portion 54 project individually from the opposite ends of the fitting portion 48 in the longitudinal direction of the casing 42, and their respective upper surfaces form supporting surfaces 55, individually. Each supporting surface 55 is continuous with its corresponding end face 50 of the fitting portion 48, and slantingly extends parallel to the ribs 52.

The front end of the connecting section 46 is provided with a connector 56 and a pair of engaging hooks 57. The connector 56 can be connected to the connector 26 of the notebook-sized PC 10. The hooks 57 can engage the body 12 of the PC. In the longitudinal direction of the connecting section 46, the connector 56 is situated substantially in the center, and the hooks 57 are spaced from each other on either side of the connector 56. A plurality of indicators 51 for indicating the operating state of the fuel cell unit 40 are arranged on the upper surface of the connecting section 46.

As shown in FIGS. 7 to 10, an auxiliary power source 60 for starting is set in the lower part of the connecting section 46. It is composed of an elongate secondary battery, capacitor, etc. A control circuit board 62 for controlling the operation of the fuel cell unit 40 is provided in the connecting section 46, overlying the auxiliary power source 60. Thus, the power source 60 is situated between the bottom wall 42a and the circuit board 62 in the direction perpendicular to the bottom wall 42a of the casing 42. The connector 56 is connected electrically to the circuit board 62.

In the casing 42 are disposed a fuel container 64, a mixing container 66 connected to the container 64, a first liquid conveying pump 67, and an electromotive element 68. The container 64 contains high-concentration methanol for use as the liquid fuel. The pump 67 feeds a fuel from the fuel container 64 to the mixing container 66. The electromotive element 68 has an anode (fuel pole) 68a, a cathode (air pole) 68b, and an electrolyte film 70 sandwiched between the anode 68a and the cathode 68b. The fuel container 64, mixing container 66, and electromotive element 68 constitute liquid holding sections. The casing 42 holds therein a second liquid conveying pump 72, an air pump 74, and a cooling fan 75. The pump 72 feeds the fuel from the mixing container 66 into the electromotive element 68. The pump 74 feeds air to the electromotive element 68.

The methanol that is fed from the fuel container 64 into the mixing container 66 by the first liquid conveying pump 67 is diluted to a given concentration with water for use as a solvent that is refluxed from the electromotive element 68. The methanol diluted in the container 66 is supplied to the anode 68a of the electromotive element 68 by the second liquid conveying pump 72. The cathode 68b of the electromotive element 68 is supplied with air by the air pump 74. The supplied methanol and air react with each other in the electrolyte film 70 between the anode 68a and the cathode 68b. Thereupon, electric power is generated between the anode 68a and the cathode 68b. The power generated in the electromotive element 68 is fed to the connector 56.

Reaction products are generated in the electromotive element 68, carbon dioxide on the side of the anode 68a and water on the side of the cathode 68b. The carbon dioxide generated on the anode side is introduced from the electromotive element 68 into the mixing container 66, and the water generated on the cathode side is introduced as steam into the mixing container 66. Humid air, a gaseous portion of the steam that is returned to the mixing container 66, along with the carbon dioxide, is discharged from the mixing container into the casing 42.

During the operation of the fuel cell unit 40, the cooling fan 75 is driven so that the air is introduced into the casing 42 through the slits 44 in the casing. The introduced air is discharged to the outside through the slits 44 after having cooled the interior of the casing 42. As this is done, the carbon dioxide and humid air that are delivered from the electromotive element 68 into the casing 42 are also discharged to the outside through the slits 44.

As shown in FIG. 5, those slits which are formed in the top wall 42b of the casing 42, out of the slits 44 that serve as breathers, extend from the interior of the casing to the outside in a direction A perpendicular to the bottom wall 42a of the casing or in a direction inclined to the direction A in a direction away from the connecting section 46. On the other hand, those slits 44 which are formed in rear wall 42c of the casing 42 extend from the interior of the casing to the outside in a direction B parallel to the bottom wall 42a of the casing or in a direction inclined to the direction B in a direction away from the bottom wall 42a.

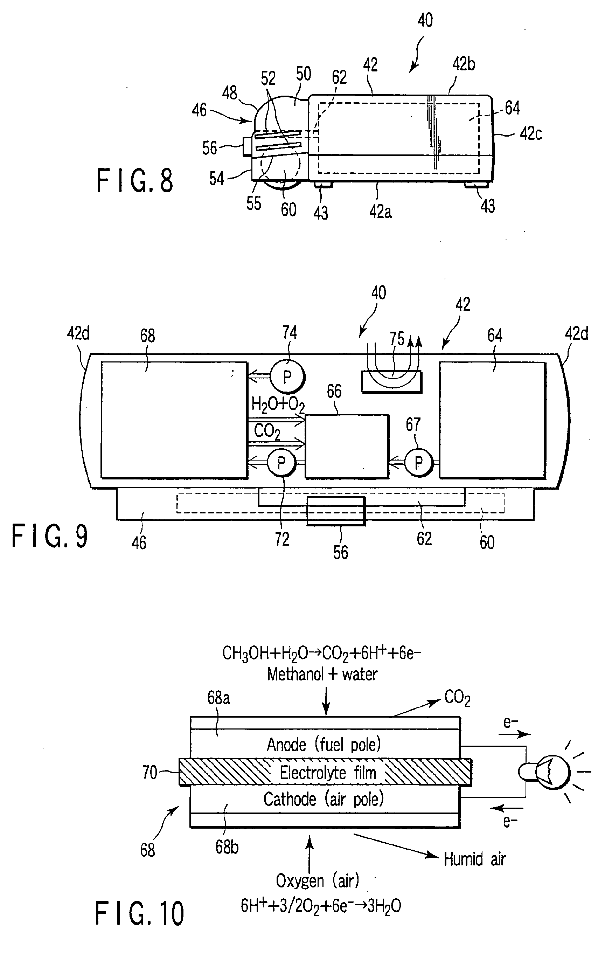

In the casing 42, as shown in FIGS. 7 and 9, the fuel container 64 is located in one end portion of the casing with respect to its longitudinal direction and adjoins one of the sidewalls 42d of the casing. The electromotive element 68 is located in the other end portion of the casing 42 with respect to its longitudinal direction and adjoins the other sidewall 42d of the casing. As mentioned before, the sidewalls 42d are convexed outward. In the present embodiment, the one sidewall 42d of the casing 42 is formed as a cover that can be attached to and detached from the casing 42, as indicated by the arrow in FIG. 7. The fuel container 64 is a fuel cartridge that can be attached to and detached from the one end portion of the casing 42, as indicated by the arrow in FIG. 7, when the cover is removed. The cover may be formed integrally with the fuel cartridge.,

As shown in FIGS. 1 to 6, the fuel cell unit 40 is connected to the notebook-sized PC 10 in a manner such that the fitting portion 48 of the connecting section 46 is fitted in the battery setting section 24 at the rear end portion of the body of the PC 10. In this case, the guide ridges 28 of the battery setting section 24 are caused to engage their corresponding guide ribs 52 of the fitting portion 48. Then, the fitting portion 48, guided by these engaged portions, is pushed into the battery setting section 24. Thereupon, the connector 56 of the connecting section 46 is connected to the connector 26 of the PC 10, and the hooks 57 engage engaging portions on the PC side. Thus, the fuel cell unit 40 is connected electrically and mechanically to the rear part of the notebook-sized PC 10, whereupon power can be supplied from the fuel cell unit to the PC 10 through the connector 56.

Those parts of the rear portion of the base 12a of the notebook-sized PC 10 which are situated on the opposite sides of the battery setting section 24 are supported on the supporting surfaces 55 of the connecting section 46. When this is done, the fitting portion 48 that is fitted in the battery setting section 24 is situated off and above the bottom wall 42a of the casing 42. As shown in FIG. 5, therefore, the rear end portion of the PC 10 that is connected to the fuel cell unit 40 is lifted and supported in a forwardly tilted state. Thus, the fuel cell unit 40 is connected to the PC 10 in a manner such that an angle θ between the bottom wall 42a of the casing 42 and the base 12a of the PC body is greater than 0°.

The fuel cell unit 40 can be easily connected to the rear part of the body of the notebook-sized PC 10, and at the same time, the installation area of the whole electronic apparatus system can be reduced. Further, the fuel cell unit 40 may be connected to the PC with its rear end portion lifted and tilted so that the casing 42 of the unit 40 is short in the depth direction and relatively high. Even in this case, the display unit 20 of the PC can be opened to any desired position for operation without interfering with the casing 42.

The control circuit board 62 of the fuel cell unit 40 is located above the auxiliary power source 60 for starting. Therefore, the notebook-sized PC 10 and the fuel cell unit 40 can be connected without subjecting their junction to any undue stress, and the PC can be tilted with ease. If the fuel cell unit 40 suffers fuel leakage during the operation of the PC 10, the fuel inevitably collects on the bottom wall 42a of the casing 42. Since the control circuit board 62 is situated above the auxiliary power source 60, however, it can avoid touching the fuel. Therefore, short-circuiting and corrosion of wiring that may be caused by the fuel can be prevented. Thus, the resulting fuel cell unit can be improved in reliability and safety.

In the present embodiment, the fitting portion 48 that constitutes the connecting section 46 of the fuel cell unit 40 has a shape corresponding to the secondary battery pack 34 so that it can be connected to the conventional battery setting section 24 of the notebook-sized PC 10. Thus, the fuel cell unit 40 can be connected directly to the PC 10 without changing the configuration on the PC side.

According to the fuel cell unit 40, the sidewalls 42d that individually face the fuel container 64 and the electromotive element 68, out of the walls of the casing 42, are outwardly convex, so that the strength of the casing 42 is enhanced. If the unit 40 is subjected to any external shock as it is carried about or worked, therefore, the casing 42, fuel container 64, electromotive element 68, etc. can be prevented from being damaged. Thus, the fuel can be prevented from leaking out into or from the unit. According to the present embodiment, the walls of the casing 42 other than the bottom wall, including the sidewalls 42d, are formed having convex surfaces. Therefore, the fuel cell unit 40 cannot be easily laid in place with the walls other than the bottom wall downward. In consequence, the fuel cell unit 40 can be stored away without the possibility of being left upside down for hours and causing the liquid fuel to spill out through the breather of its fuel tank or the like.

As shown in FIG. 5, the casing 42 is penetrated by the slits 44 through which the carbon dioxide that is generated from the anode side during the power generation or the steamy air from the cathode side is discharged to the outside. The slits 44 in the top wall 42b of the casing 42 extend vertically upward from the interior of the casing to the outside or at an angle on the rear side with respect to the notebook-sized PC 10. Therefore, the humid exhaust gas that is discharged through the slits 44 cannot be blown against the PC 10, thus the PC cannot be adversely affected by it. Further, the slits 44 which are formed in the rear wall or sidewalls of the casing 42 extend horizontally or obliquely upward from the interior of the casing to the outside. Accordingly, the humid exhaust gas cannot be blown against the bearing surface of a desk or the like. Thus, there is no possibility of dew condensing and wetting the desk or papers thereon.

The following is a description of further embodiments of the invention. In the description of the embodiments to follow, like reference numerals are used to designate like portions that are described in connection with the first embodiment, and a detailed description of those portions is omitted.

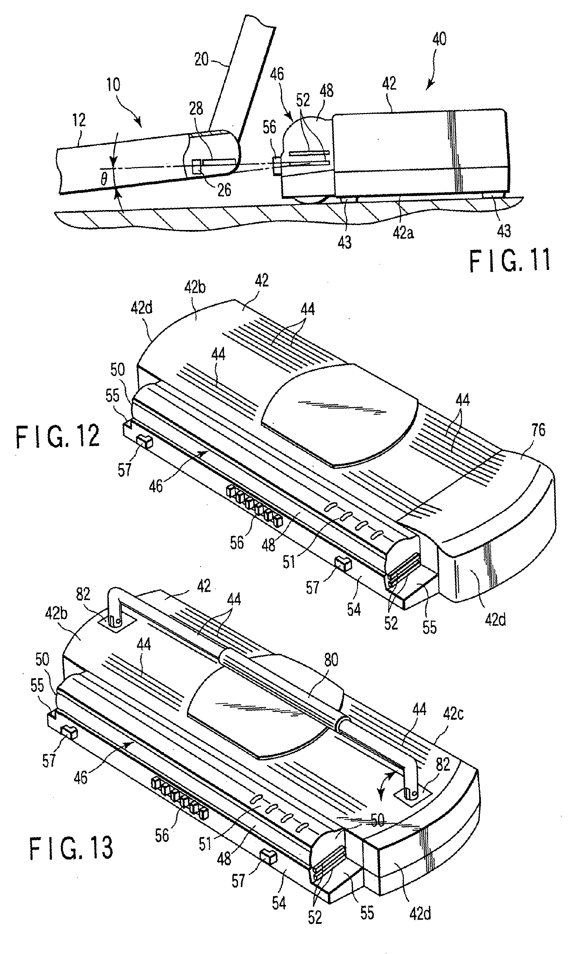

In the foregoing first embodiment, terminals of the connector 26 and the guide ridges 28 of the battery setting section 24 of the notebook-sized PC 10 extend substantially parallel to the base 12a of the body 12. According to a second embodiment, as shown in FIG. 11, however, terminals of a connector 26 and guide ridges 28 extend from the interior of a body 12 toward the backside of the body and at an angle on the side of a base 12a. The angle θ between the body base 12a and the extending direction of the terminals of the connector 26 and the guide ridges 28 is adjusted to a value greater than 0°. Guide ribs 52 of a connecting section 46 of a fuel cell unit 40 extend substantially parallel to a bottom wall 42a of a casing 42, that is, substantially horizontally.

According to the second embodiment arranged in this manner, the connector 26 and the guide ridges 28 of a notebook-sized PC 10 are inclined at the angle *θ,* so that the tilted PC 10 can be connected more easily to the fuel cell unit 40. The second embodiment shares other functions and effects with the first embodiment.

In a fuel cell unit according to a third embodiment shown in FIG. 12, sidewalls 42d that individually face a fuel container 64 and an electromotive element 68, out of walls of a casing 42, are outwardly convex, and an end portion 76 of a top wall 42b that faces the fuel container is also outwardly convex. According to this configuration, the strength of the casing 42 is further enhanced. If the fuel cell unit 40 is subjected to any external shock as it is carried about or worked, therefore, the casing 42, fuel container 64, electromotive element 68, etc. can be prevented from being damaged, so that leakage of the fuel can be prevented.

In the third embodiment, that part of the top wall 42b of the casing 42 which faces the electromotive element and any desired part of the rear wall, as well as the end portion 76 of the top wall, may be outwardly convex.

According to a fourth embodiment, as shown in FIG. 13, a fuel cell unit 40 has a unit conveying handle 80 attached to a casing 42. The handle 80, which serves as a grip portion, is mounted on a top wall 42b of the casing 42. It is in the form of an elongate rod that extends in the longitudinal direction of the casing 42. The opposite end portions of the handle 80 are bent squarely and supported for rocking motion on the top wall 42b by means of hinge portions 82, individually. Thus, the handle 80 is rockable between a gripping position in which it is set upright at right angles to the top wall 42b and a flat position in which it is flattened and extends substantially parallel to the top wall.

According to this fourth embodiment, the handle 80 can be held as the fuel cell unit 40 that is removed from a notebook-sized PC 10 is carried about, and the whole unit can be kept level with the bottom wall of the casing 42 downward. Thus, the fuel in the casing 42 can be prevented from leaking out during the transportation. In placing the fuel cell unit 40 on a desk or the like, a user can readily discriminate the top and bottom of the unit by the position of the handle 80, so that the unit can be prevented from being laid sideways or upside down by mistake. Thus, leakage of the fuel can be prevented.

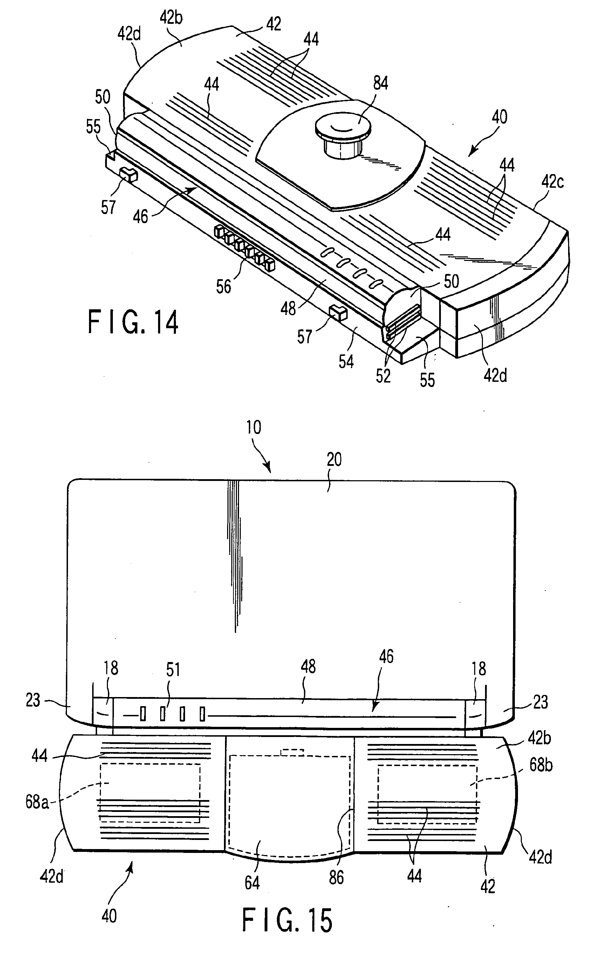

According to a fifth embodiment shown in FIG. 14, a columnar protrusion 84 that serves as a grip portion protrudes from the central part of a top wall 42b of a casing 42. Holding the protrusion 84 in the center enables laterally balanced conveyance of a fuel cell unit 40. Further, the protrusion 84 makes the unit 40 unbalanced when the unit 40 is placed upside down. Accordingly, the fuel cell unit 40 is easy to carry about, and can be prevented from being placed upside down. With this configuration, the protrusion 84 can be also held as the fuel cell unit 40 is transported. Thus, the fifth embodiment can provide the same functions and effects of the fourth embodiment.

In a fuel cell unit 40 according to a sixth embodiment, as shown in FIGS. 15 to 17, an electromotive element is divided into an even number of electromotive portions, e.g., two electromotive portions 68a and 68b. In a casing 42, the electromotive portions 68a and 68b are located individually at the longitudinally opposite end portions of the casing. They are distributed so that their resultant center of gravity is situated near that of the casing 42.

In the casing 42, a container storage portion 86 is formed near the center of gravity of the casing between the electromotive portions 68a and 68b. A fuel container 64 is a fuel cartridge that is removably attached to the container storage portion 86 from the backside. The outer surface of the fuel container 64 includes a bottom face 64a, a front face 64c, and a pair of side faces, which are flat, and a top face 64b and a rear face 64d that are outwardly convex surfaces. The front face 64c of the container 64 is provided with a connecting port for fuel supply. The fuel container 64 is attached to the container storage portion 86 with its rear face 64d projecting from the casing 42. Further, that wall portion 86a of a top wall 42b of the casing 42 which faces the container storage portion 86 constitutes a convex surface portion that projects outward.

According to the fuel cell unit 40 constructed in this manner, the electromotive element is divided and distributed evenly in the casing 42, so that the overall weight of the unit is balanced. If the unit is cleared of the fuel container 64 and transported singly, therefore, it can be prevented from tilting. Further, the difficulty in fuel distribution that is liable to be entailed by concentration of the electromotive element can be eliminated, and a sudden local temperature increase by heating in the unit can be prevented. Having the,convex surfaces, furthermore, the fuel container 64 can maintain high durability even if its internal pressure is raised by temperature increase or exhaust gas recovery.

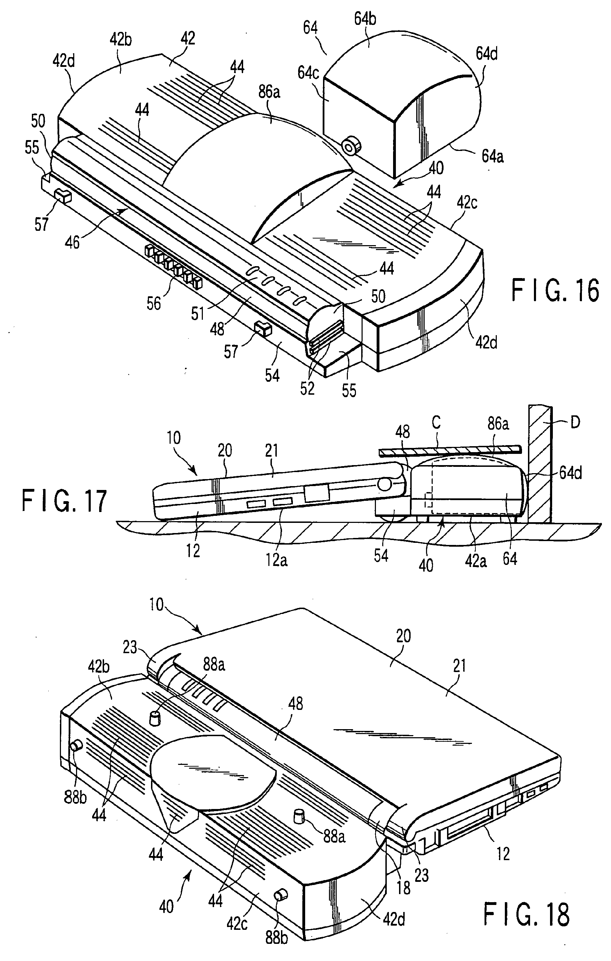

The top and rear faces of the fuel container 64 are convex, and the wall portion 86a of the casing 42 is also formed as a convex surface portion. If the fuel cell unit 40 is used near a wall D of a desk or the like or if an object C is placed on the top of the casing 42 during operation by mistake, as shown in FIG. 17, therefore, the wall D or the object C can be prevented from coming intimately into contact with the outer surface of the casing 42. In consequence, slits 44 for ventilation in the casing 42 can be prevented from being stopped up, so that the fuel cell unit can be worked with stability. Since the wall portion 86a that faces the container storage portion 86 is formed as a convex surface portion that projects outward, moreover, the strength of the casing 42 is increased. If the unit is subjected to any external shock, therefore, the casing, fuel container, etc. can be prevented from being damaged, and fuel leakage can be avoided. In addition, the fuel cell unit 40 cannot be easily laid in place with the other walls than the bottom wall downward. Thus, the fuel cell unit 40 can be stored away without the possibility of being left upside down for hours and causing the liquid fuel to spill out through the breather of its fuel tank or the like.

When the fuel container 64 stored with 100 cc of a 10-M (10-mol/L) water solution of methanol was inserted into the container storage portion 86 to feed the fuel for power generation, a notebook-sized PC was able to be operated continuously for one hour. When the fuel cell unit 40 was removed from the PC and carried about, it was able to be transported without tilting, and the fuel never leaked out. When the fuel cell unit 40 was used near the wall D of the desk or when the object C was placed on the top of the casing 42 during operation, moreover, air was readily introduced into the unit, one hour of continuous operation was ensured.

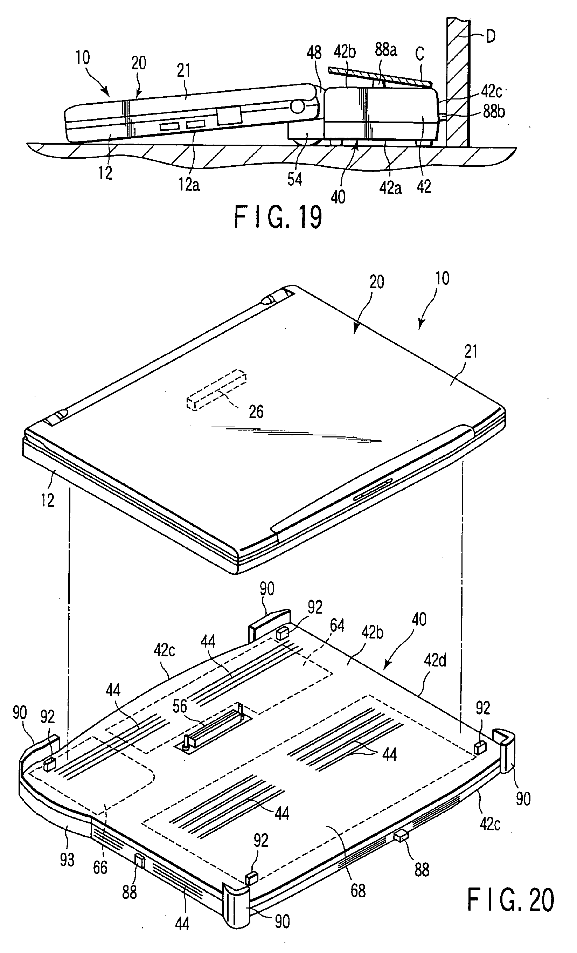

In a fuel cell unit 40 according to a seventh embodiment, as shown in FIGS. 18 and 19, a plurality of slits 44 for use as breathers are formed in a top wall 42b and a rear wall 42c of a casing 42. A plurality of protrusions 88a, e.g., two in number, protrude from those parts of the top wall 42b near the slits 44. The two protrusions 88a are different in height. They are located dispersedly in positions such that they cannot support the casing 42, e.g., positions that prohibit three-point support.

A plurality of protrusions 88b, e.g., two in number, protrude from those parts of the rear wall 42c near the slits 44. The two protrusions 88b are different in height. They are located dispersedly in positions such that they cannot support the casing 42, e.g., positions that prohibit three-point support. Further, four protrusions protrude from a bottom wall 42a of the casing 42, thereby forming leg portions, and a plurality of slits for use as breathers are formed in the bottom wall 42a.

According to the fuel cell unit 40 constructed in this manner, the protrusions 88a and 88b are arranged on the outer surface of the casing 42. If the rear face of the unit touches the wall D or if the object C is placed on the top of the unit, therefore, the slits 44 can be prevented from being stopped up, so that smooth intake and exhaust through the slits 44 can be maintained. Accordingly, the fuel cell unit 40 can be protected against lowering of output and overheating, so that power can be supplied steadily in various working conditions. Further, the protrusions 88a and 88b can prevent the fuel cell unit 40 from being set upright or upside down, thereby preventing leakage of the fuel. The protrusions as the leg portions on the bottom wall 42a of the casing 42 favorably ensure intake and exhaust through the bottom wall.

The shape, height, and location of the protrusions may be variously changed as required.

In a fuel cell unit 40 according to an eighth embodiment, as shown in FIGS. 20 to 22, a casing 42 is in the form of a flat rectangular box, which can be connected to base side of a notebook-sized PC 10. A top wall 42b of the casing 42 constitutes a bearer on which a body 12 of the PC 10 is placed. This bearer has substantially the same plane shape and size with the body 12. The casing 42 has a bottom wall 42a opposed to the top wall 42b across a gap, a pair of sidewalls 42d situated between the top and bottom walls, a rear wall 42c, and a front wall 42c. The top wall 42b, sidewalls 42d, rear wall 42c, and front wall 42c are formed having a plurality of slits 44 that serves as breathers, individually.

A fuel container 64, mixing container 66, and electromotive element 68 are arranged in the casing 42. As in the first embodiment, moreover, first and second liquid conveying pumps, air pump, cooling fan, etc. (not shown) are arranged in the casing 42, thus constituting a DMFC.

Positioning lugs 90 protrude individually from the four corners of the peripheral edge of the top wall 42b of the casing 42. The lugs 90 serve to position the body 12 of the notebook-sized PC 10 on the top wall 42b. Supporting lugs 92 protrude individually from the four corner portions of the top wall 42b. They serve as supporters that maintain a gap between the top wall 42b and the base 12a of the PC body 12. The lugs 92 are lower than the lugs 90. The top wall 42b is provided with a connector 56, which projects upward. The connector 56 is supplied with power that is generated in the electromotive element 68. The height of projection of the connector 56 is greater than that of each lug 92. The connector 56 can be connected to a connector 26 on the base 12a of PC body 12.

The rear wall 42c that faces the fuel container 64 and the mixing container 66, among the other walls of the casing 42, has a curved surface that projects outward. Likewise, a wall portion 93 of the sidewall 42d that faces the mixing container 66 has a curved surface that projects outward. Projections 88 project individually outward from those portions of the sidewalls 42d, rear wall 42c, and front wall 42c near the slits 44.

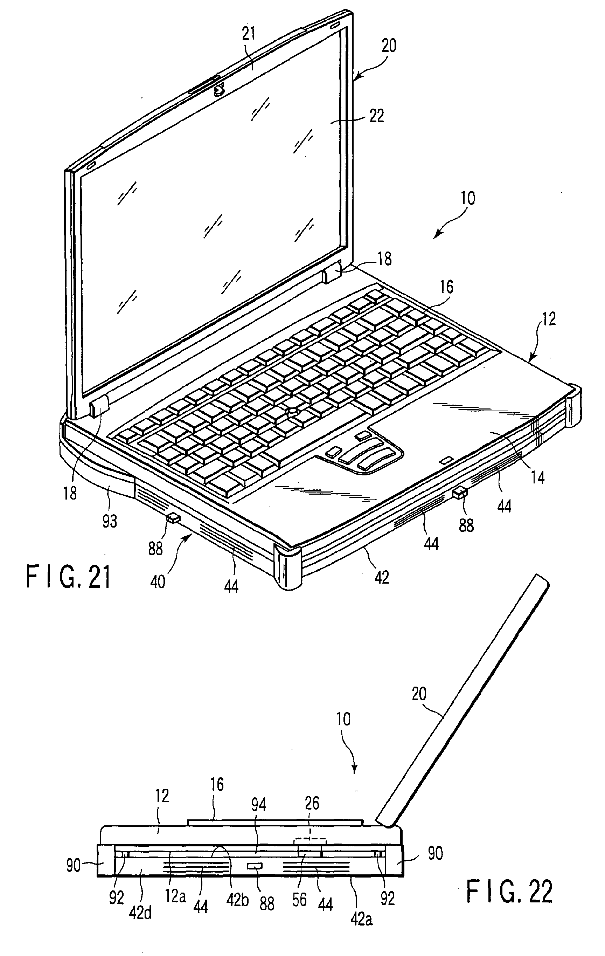

In connecting the notebook-sized PC 10 and the fuel cell unit 40, the body 12 is placed on the top wall 42b of the casing 42 in a manner such that it is positioned by means of the positioning lugs 90. At the same time, the connector 26 of the PC 10 is connected to the connector 56 of the fuel cell unit. Thereupon, the PC 10 is supported in position on the top wall 42b of the casing 42, as shown in FIGS. 21 and 22, and is connected electrically to the fuel cell unit 40 to be supplied with power. In this state, a space 94 through which air can be circulated is defined between the top wall 42b of the casing 42 and the base 12a of the body 12 by the supporting lugs 92.

According to the fuel cell unit 40 constructed in this manner, the wall portions that face the liquid holding sections, including the fuel container 64, electromotive element 68, etc., are outwardly convexed, so that the strength of the casing 42 is increased. If the unit 40 is subjected to any external shock as it is carried about or used, therefore, the casing 42, fuel container 64, electromotive element 68, etc. can be prevented from being damaged. Thus, the fuel can be prevented from leaking out into or from the unit. Further, the wall portions of the casing 42 have a convex surface, and the connector 26 projects longer than any other portions. Therefore, the fuel cell unit 40 cannot be easily laid in place with the other walls than the bottom wall downward. Thus, the fuel cell unit 40 can be stored away without the possibility of being left upside down for hours and causing the liquid fuel to spill out through the breather of its fuel tank or the like.

The projections 88 are arranged on those portions of the outer surface of the casing 42 near the slits 44. If the unit touches the wall D, therefore, the slits 44 can be prevented from being stopped up, so that smooth intake and exhaust can be maintained. Accordingly, the fuel cell unit can be protected against lowering of output and overheating, so that power can be supplied steadily in various working conditions. The projections 88 can prevent the fuel cell unit 40 from being placed with one of the sidewalls 42d or the rear wall 42c downward or upside down, thereby preventing leakage of the fuel.

Since the space 94 is secured between the top wall 42b of the casing 42 and the base 12a of the body 12, the slits 44 in the top wall 42b cannot be stopped up, so that air can pass through the space 94. Accordingly, the fuel cell unit can be protected against lowering of output and overheating. A layer of air for heat insulation is formed between the notebook-sized PC 10 and the fuel cell unit 40. Thus, the possibility of heat from the fuel cell unit being transferred to the PC and causing malfunction of electronic circuits can be lowered.

For example, some of the components according to the foregoing embodiments may be omitted. Further, the components according to the different embodiments may be combined suitably.

The fuel cell unit and the electronic apparatus system according to the present invention may be applied to any other electronic apparatuses than the notebook-sized PC, such as mobile apparatuses, portable terminals, etc. The form of the fuel cell is not limited to the DMFC and may alternatively be in any other form, such as a PEFC (polymer electrolyte fuel cell).

## Claims

1. A fuel cell unit **characterized by** comprising:
a casing (42);
an electromotive element (68) which is located in the casing and generates electric power through a chemical reaction; and
a fuel container (64) which is removably connected to the casing and contains a fuel to be supplied to the electromotive element,
the casing having a base (42a) and a wall surface in the form of an outwardly convex curved surface (42d, 64d, 76, 93).

2. A fuel cell unit according to claim 1, **characterized in that** the wall surface is at least one of surfaces including side faces, a rear face, and a top face of the casing (42).

3. A fuel cell unit according to claim 1, **characterized in that** the fuel container (64) has a shape constituting a part of the curved wall surface.

4. A fuel cell unit according to claim 3, **characterized in that** the casing (42) has one side face (42d) constituting the curved wall surface, and the other side face (42d) opposed to the one side face and having the shape of an outwardly convex curved surface.

5. A fuel cell unit **characterized by** comprising:
a casing (42);
an electromotive element (68) which is located in the casing and generates electric power through a chemical reaction; and
a fuel container (68) which is removably connected to the casing and contains a fuel to be supplied to the electromotive element,
the casing having a base (42a) and a wall surface provided with a convex member (88).

6. A fuel cell unit according to claim 5, **characterized in that** the casing (42) has breathers (44) formed in the wall surface.

7. A fuel cell unit according to claim 5 or 6, **characterized in that** the wall surface is at least one of surfaces including side faces, a rear face, and a top face of the casing (42).

8. A fuel cell unit according to claim 5, **characterized by** further comprising a connecting section (46) through which the electric power generated by the electromotive element (68) is supplied to an electronic apparatus.

9. A fuel cell unit which supplies electric power to an electronic apparatus, **characterized by** comprising:
a casing (42) capable of being stored with a fuel; and
a grip portion (80, 84) attached to the casing.

10. A fuel cell unit according to claim 9, **characterized in that** the grip portion (80) is in the form of a rod extending in a longitudinal direction of the casing (42), opposite end portions of the grip portion being bent and connected to the casing.

11. A fuel cell unit according to claim 10, **characterized in that** the casing (42) has a base (42a) and a top portion (42b) opposed to the base, and the opposite end portions of the grip portion (80) are rockably supported on the top portion of the casing by hinge portions (82).

12. A fuel cell unit according to claim 9, **characterized in that** the grip portion (84) has a seizable protrusion protruding from the outer surface of the casing (42).

13. A fuel cell unit according to claim 12, **characterized in that** the casing (42) has a base (42a) and a top portion (42b) opposed to the base, and the protrusion (84) is set up substantially on the central part of the top portion.

14. A fuel cell unit which supplies electric power to an electronic apparatus, **characterized by** comprising:
a casing (42);
a first electromotive element (68a) which is located in the casing and generates electric power through a chemical reaction;
a second electromotive element (68b) which is located in the casing and generates electric power through a chemical reaction; and
a fuel container (64) which is located between the first and second electromotive elements and contains a fuel to be supplied to the first and second electromotive elements.

15. A fuel cell unit according to claim 14, **characterized in that** the first electromotive element (68a) is located in one end portion of the casing (42), and the second electromotive element (68b) is located in the other end portion opposite to the one end portion.

16. A fuel cell unit according to claim 14 or 15, **characterized in that** the first and second electromotive elements (68a, 68b) are arranged so that the center of gravity of both elements is situated near the center of gravity of the casing (42), and the fuel container (64) is located near the center of gravity of the casing.

17. A fuel cell unit according to claim 14 or 15, **characterized in that** the fuel container (64) is removably set in the casing (42) and has an outer surface including at least one flat surface and at least one convex surface projecting outward.

18. A fuel cell unit according to claim 14, **characterized in that** the casing (42) has a storage portion (86) which stores the fuel container (64) and a convex surface portion (86a).

19. A fuel cell unit according to claim 18, **characterized in that** the casing (42) has a plurality of breathers (44) opening in an outer surface of the casing and communicating with the interior of the casing, and the convex surface (86a) is located near the breathers.
